# EUROPEAN PATENT APPLICATION

(11) **EP 1 416 350 A1**
(43) Date of publication of application: **06.05.2004**
(21) Application number: 02425659.6
(22) Date of filing: 30.10.2002
(51) Int. Cl.: G05D 23/13

(54) **A mixing cock with thermostat**

(71) Applicant: Artflow S.r.l., 28010 Bolzano Novorese (NO) (IT)
(72) Inventor: Candito, Ugolino, 13011 Borgosesia (VC) (IT)
(74) Representative: Tansini, Elio Fabrizio

(57) **Abstract**

It is described a mixing cock with thermostat comprising a main body 2, a mixing chamber 7, a thermal expansion valve 9 adapted to control the ratio between the coldwater and hot-water flows entering the mixing chamber 7, inflow control valves 13, 14 for cold and hot water housed in the main body 2 and each comprising a closure member 17 adapted to abut, in the closed position of the valve, against an annular abutment seat 18, and a support stem 19 sliding internally of the main body 2 and associated with the closure member 17.

## Description

The present invention relates to a mixing cock with thermostat, in particular for showers and bathtubs.

It is known that a mixing cock provided with thermostat comprises a main body having an inlet to be coupled with pipe connections for cold water and hot water and at least one outlet for outflow of the mixed water.

The desired temperature of the mixed water is controlled by a thermal expansion valve.

The thermal expansion valve practically is a proportional valve controlling the ratio between the cold-water and hot-water flows to be admitted to the mixing chamber. This ratio determines the temperature of the mixed water coming out of the cock.

First manual-regulation means comprising an operating member generally in the form of a knob, disposed externally of the main body of the cock enables the desired temperature of the water flowing therefrom to be established by acting on the thermal expansion valve.

Also provided within the main body of the cock, and downstream of the hot water and cold water inlet are respective valves for flow control, in turn controlled by second manual-regulation means active on both valves and provided with an operating handle external to the main body itself and adapted for use in order to vary said inflows between a maximum value and lower values, until complete shutting-off of the flows themselves.

In the known art, usual valves for control of hot and cold water are gate valves, i.e. they each comprise a movable plate interposed between fixed plates on which the movable plate is slidable to vary the water-passage port.

The above mentioned typology of said flow control valves has some limits and drawbacks.

In fact, first of all, sliding of the movable plate on the fixed plates involves a non negligible wear and therefore frequent and expensive servicing operations are required.

In addition, the structure of a gate valve is rather complicated in terms of manufacture, and use of expensive materials is needed for reducing wear and increasing reliability.

Under this situation the technical task underlying the present invention is to devise a mixing cock with thermostat capable of substantially obviating the mentioned drawbacks.

Within the scope of this technical task it is an important aim of the invention to devise a mixing cock with thermostat provided with control valves for the hot-water and cold-water flows entering the cock itself, which mixing cock is of high reliability, simple structure and capable of greatly reducing not only the construction costs but also costs for cock maintenance.

The technical task mentioned and the aim specified are substantially achieved by a mixing cock with thermostat which is characterized in that it comprises one or more of the technical solutions herein claimed.

Description of two preferred, but not exclusive, embodiments of a mixing cock with thermostat in accordance with the present invention is now given hereinafter by way of non-limiting example with the aid of the accompanying drawings, in which:
- Fig. 1 is a longitudinal section of a first embodiment of a mixing cock in accordance with the invention;
- Fig. 2 is a section taken in the plane II-II in Fig. 1;
- Fig. 3 shows a longitudinal section of a second embodiment of a mixing cock in accordance with the invention; and
- Fig. 4 is a section in the plane IV-IV in Fig. 3.

With reference to the drawings, the mixing cock with thermostat in accordance with the invention is generally identified by reference numeral 1.

Cock 1 comprises a main body 2 having inlets 3, 4 coupled with pipe connections 5, 6 for conveyance of cold and hot water, respectively.

Centrally formed in the main body 2 is a mixing chamber 7 in communication with outlets 8 for outflow of the mixed water.

In a conventional and known manner, the ratio between the cold water and hot water flows coming from inlets 3, 4 and designed to enter the mixing chamber 7 is controlled by a thermal expansion valve 9.

The thermal expansion valve 9 comprises a thermostat 10 controlled by first manual-regulation means 11 provided with an operating member 12 disposed externally of the main body 2. As a reaction to the water temperatures, thermostat 10 is contracted or expanded, thereby regulating the ratio between the cold-water and hot-water flows entering the mixing chamber 7 for the purpose of maintaining substantially constant the predetermined temperature of the mixed water coming out of the cock.

Downstream of the cold and hot water inlets 3, 4 respective flow control valves 13, 14 are provided the position of which is made variable between a full-closure and a maximum-opening arrangement by the presence of second manual-regulation means 15 simultaneously active on both flow control valves 13, 14 and provided with an operating handle 16.

In an original manner, the flow control valves 13, 14 each comprise a closure member 17 adapted to abut, in the closed position of the respective valve, against an annular abutment seat 18, formed in the main body 2.

In addition, the control valves 13, 14 comprise a support stem 19 slidable within a respective bushing 20 engaged internally of the main body 2. The support stem 19 has a first end 19a associated with the closure member 17 and a second drive end 19b associated with the second regulation means 15.

The closure member 17 is provided with a seal 21 disposed at the end thereof and abutting against a radial expansion 19c of the stem 19 itself.

A thrust spring 22 is active on the closure member 17 with a force oriented in the opposite way with respect to the stem translation direction during opening of valves 13, 14. The thrust spring 22 helps in keeping seal 21 against the annular abutment seat 18 when valves 13 and 14 are in a closed position. Practically the thrust spring 22, in addition to maintaining seal 21 against the abutment seat 18 in a steady manner, in the closed position of the flow control valves, enables possible reductions in thickness occurring over time in seal 21 to be compensated for, by imposing a corresponding valve sliding.

The second manual-regulation means 15 comprises a screw 23 set in rotation by the operating handle 16 and a nut screw 24 in engagement with each of the second ends 19b of the support stem 19 of a corresponding flow control valve. In this way rotation of screw 23 causes simultaneous translation of stems 19 and of the closure members 17 associated therewith.

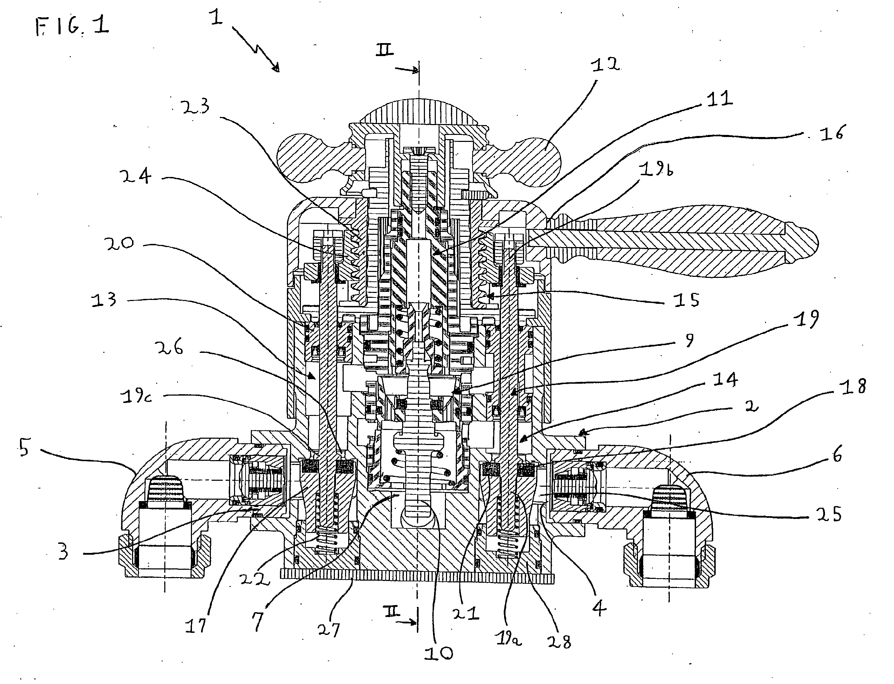

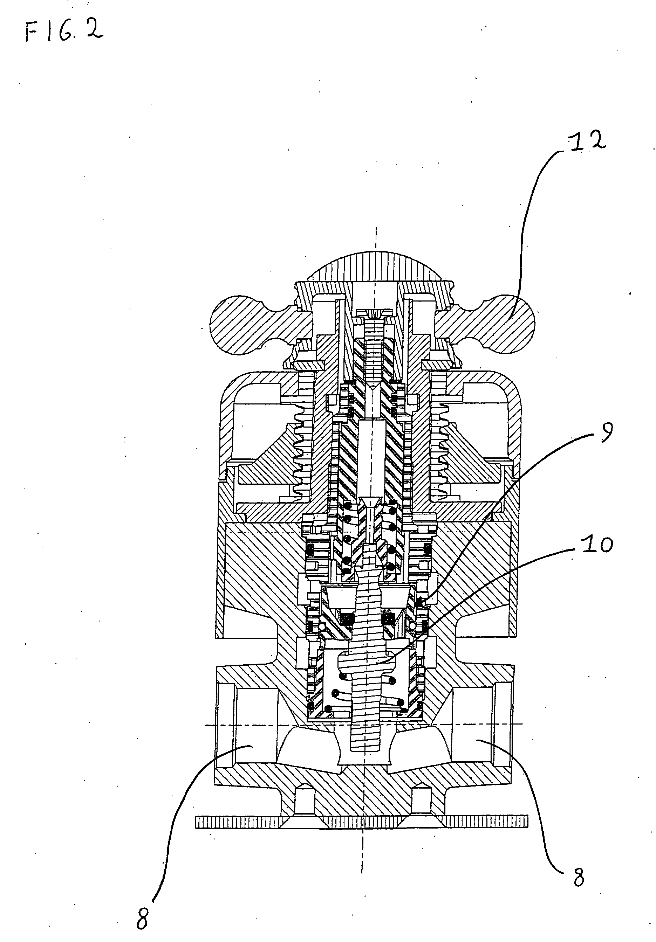

In a first embodiment, shown in Figs. 1 and 2, the main body 2, downstream of each inlet 2, 3, has an entry chamber 25 adapted to house the closure member 17 of a corresponding flow control valve. The entry chamber 25 has a through hole 26 passed through by the support stem 19 and of a diameter suitable for passage of the water flow around said stem. The annular abutment seat 18 is formed in the main body 2 around the through hole 26 on the side of the entry chamber 25.

In this way in this first embodiment, translation of the stem and closure member for opening of the flow valve takes place in the opposite way with respect to that of the water flow.

Vice versa, translation of the stem and closure member for closure of the valve takes place in the same way as the water flow.

By externally shaping the closure member 17 so that it appears at least partly of truncated conical form widening out towards seal 21, i.e. in the direction of the water flow, said water flow generates a hydraulic thrust on the closure member in the same direction as the force exerted by spring 22, thus helping in increasing the thrust produced by the spring 22 itself in this direction, in the closed position of the valve.

Advantageously, associated with the main body 2 at the entry chambers 25 is a cover 27 for closing said chambers, which cover is removable for access to the closure member 17 of the flow valves 13, 14.

More specifically, provided under the closure cover 27 are plug elements 28 which are removable as well and against which the thrust springs 22 abut.

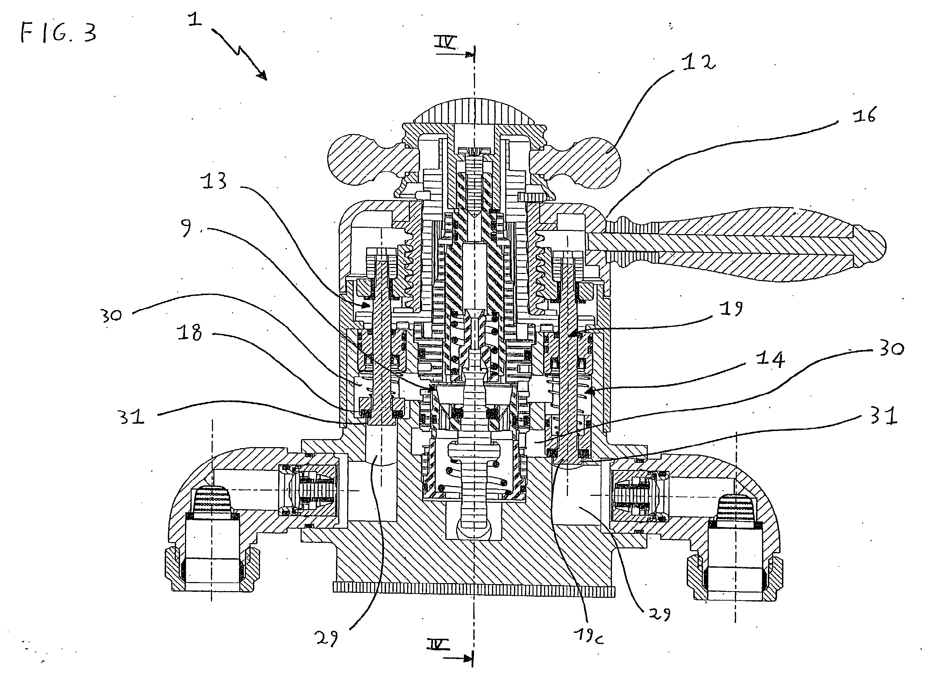

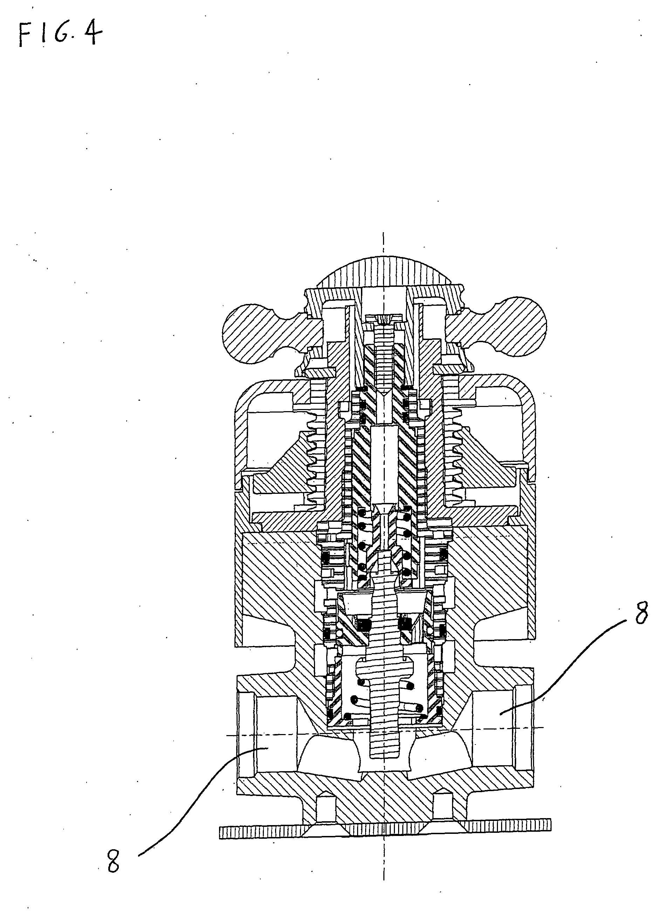

In a second embodiment shown in Figs. 3 and 4, the main body 2, at each inlet 3, 4 has a flow-admission channel 29 and, consecutively, a water-passage space 30 adapted to house the closure member 17 of a corresponding flow valve. A communication port 31 is provided between the flow-admission channel 29 and the water-passage space 30, which port can be passed through by the radial expansion 19c of the support stem 19 in the closed position of the flow valve. The annular abutment seat 18 is formed in the main body 2 around the communication port 31 on the side of the water-passage space 30. Practically, in this second embodiment translation of stem 19 and of the closure member 17 carried out to cause opening of the flow control valve takes place in the same way as the water flow.

Vice versa, translation of the stem and closure member for closing the valve takes place in the opposite way with respect to the water flow. The thrust spring 22 must be therefore able to help in keeping seal 21, in the closed position of the valve, in contact with the annular abutment seat 18 against the action of the thrust generated by the water flow.

The invention achieves important advantages.

In fact, first of all, the flow control valves for cold and hot water have a structure of simple construction and high reliability.

In particular, it is to be pointed out that the seals for the valve closure members are subjected to a very reduced wear since they are only designed to carry out a movement towards their abutment seats in the closed position of the valve, without sliding during flow control.

In addition, the thrust springs provided in the flow control valves gradually compensate for the progressive and low reduction in thickness of the seals.

Practically, frequent interventions are not required for servicing of the mixing cock in accordance with the invention and therefore servicing has a very reduced cost.

Furthermore, in the above illustrated first embodiment the particular outer shape of the closure member of the flow control valve helps in ensuring full shutting-off of the water at a closed position of the valves themselves.

Finally, still in the first embodiment, the presence of a closure cover that can be immediately removed makes it easy to accede to the closure member of the valves, which will facilitate the few servicing interventions possibly required.

## Claims

1. A mixing cock with thermostat comprising:
- a main body (2) having inlets (3, 4) for cold and hot water and at least one outlet (8) for outflow of the mixed water;
- a mixing chamber (7) formed in said main body (2);
- a thermal expansion valve (9) adapted to control the ratio between the cold-water and hot-water flows designed to enter the mixing chamber (7);
- first manual-regulation means (11) adapted to adjust the mixed-water temperature, active on said thermal expansion valve (9),
- valves (13, 14) for control of the hot-water and cold-water inflows housed in said main body (2) downstream of said inlet (3, 4),
- second manual-regulation means (15) active on both said flow control valves (13, 14),
**characterized in that** said flow control valves (13, 14) each comprise:
- a closure member (17) adapted to abut, in the closed position of the valve, against an annular abutment seat (18) formed in said main body (2), and a support stem (19) sliding internally of said main body and having a first end (19a) associated with said closure member (17) and a second drive end (19b) associated with said second regulation means (15).

2. A cock as claimed in claim 1, **characterized in that** said closure member (17) has a seal (21) disposed at the end thereof and abutting against a radial expansion (19c) of the stem itself (19), and **in that** at least one thrust spring (22) is provided which is active on the closure member (17) against the translation action of the stem for opening of the valve and adapted to help in keeping said seal (21) against said annular abutment seat (18) in the closed position of the valve.

3. A cock as claimed in claim 2, **characterized in that** said main body (2) downstream of each of said inlets (3, 4) has an entry chamber (25) adapted to house the closure member (17) of a corresponding flow control valve (13, 14), said entry chamber (25) having a through hole (26) passed through by said support stem (19) and suitable for passage of the water flow, and **in that** said annular abutment seat (18) is formed around said through hole (26) on the side of said entry chamber (25).

4. A cock as claimed in claim 3, **characterized in that** said closure member (17) externally has a shape at least partly of frustoconical configuration widening out towards said seal (21) and adapted to enable the water to generate a hydraulic thrust onto the closure member in the same way as the thrust exercised by said pressure spring (22).

5. A cock as claimed in claim 2, **characterized in that** said main body (2) has a flow-admission channel (29) at each of said inlets (3, 4) and, consecutively, a passage space (30) for the water adapted to house the closure member (17) of a corresponding flow control valve, a communication port (31) being provided between said flow-admission channel (29 and passage space (30), which port can be passed through by said radial expansion (19c) of the support stem (19) in the closed position of the valve, and **in that** said annular abutment seat (18) is formed around said communication port (31) on the side of said passage space (30).

6. A cock as claimed in claim 1, **characterized in that** said second manual-regulation means (15) active on both the inflow control valves for hot and cold water 13, 14 comprises a screw (23) moved by said operating handle (16) and a nut screw (24) engaged on each of the second ends (19b) of the support stem (19) of a corresponding flow control valve.

7. A cock as claimed in claim 3, **characterized in that** associated with said main body (2) at said entry chambers (25) is at least one cover (27) for closure of the chamber, which is removable for access to the closure member (17) of said flow control valves (13, 14).

8. A cock as claimed in claim 1, wherein said regulation means (15) has a handle (16) disposed externally of said main body (2).
